# EUROPÄISCHE PATENTSCHRIFT

(11) **EP 2 444 183 B1**
(45) Veröffentlichungstag und Bekanntmachung des Hinweises auf die Patenterteilung: **28.09.2016**
(21) Anmeldenummer: 11185051.7
(22) Anmeldetag: 13.10.2011
(51) Int. Cl.: B23B 33/00

(54) **Stirnseitenmitnehmer**
Front end actuator
Douille d'accouplement avant

(30) Priorität: 22.10.2010 DE 102010060118
(43) Veröffentlichungstag der Anmeldung: 25.04.2012
(73) Patentinhaber: Röhm GmbH, 89567 Sontheim/Brenz (DE)
(72) Erfinder: Scheu, Rudolf, 89431 Bächingen (DE)
(74) Vertreter: Hentrich Patentanwälte PartG mbB

(56) Entgegenhaltungen:
- EP-A2- 0 201 756
- WO-A1-95/04623
- DE-A1- 1 602 792
- DE-A1- 19 534 073
- DE-B- 1 040 879
- DE-B- 1 080 834
- DE-B- 1 128 255
- DE-B- 1 129 803
- DE-U- 1 703 830
- GB-A- 725 439
- RÖHM: "Clamping systems in many variations", RÖHM GESAMTKATALOG SPANNTECHNIK,, 1 April 1999 (1999-04-01), pages 2023-2027, XP003029290,

## Beschreibung

Die Erfindung betrifft einen Stirnseitenmitnehmer gemäß dem Oberbegriff des Anspruchs 1. Ein solcher Stirnseitenmitnehmer ist aus der GB 725 439 A bekannt.

Stirnseitenmitnehmer werden im Zusammenwirken mit einer Reitstockpinole genutzt, um Werkstücke an ihren Stirnseiten einzuspannen, wenn eine

Einspannung an den Seiten- oder Umfangsflächen nicht möglich ist, weil dort beispielsweise die Bearbeitung erfolgen soll. Die Einspannung an den Stirnseiten bewirkt, dass auch die Drehmomentübertragung über die Stirnseiten des Werkstücks erfolgen muss und zudem die bei axialer und radialer Bearbeitung wirkenden Kräfte die Einspannung und die Lage des Werkstücks nicht beeinträchtigen dürfen.

Ein Stirnseitenmitnehmer der eingangs genannten Art ist in der DE 1 703 830 U offenbart. Diese zeigt einen Stirnseitenmitnehmer, bei dem mehrere Abstützglieder in der Führungshülse gelagert und geführt sind. Es ist eine Mitnahmeplatte vorgesehen, die mit den Abstützgliedern im Kontakt steht. Die Abstützglieder weisen dabei einen ballig geformten Kopf auf, der in eine dazu korrespondierende kugelpfannenartige Ausnehmung eingreift, die an der Mitnahmeplatte ausgebildet ist. Hierzu ist aufgeführt, dass die Ausnehmung so gestaltet ist, dass ihr Radius etwa anderthalbmal so groß ist wie der des Kopfes. Weiterhin ist bei diesem Stirnseitenmitnehmer vorgesehen, dass die Abstützglieder durch Federn beaufschlagt sind. In der DE 00 59 116 A1 ist ein Stirnseitenmitnehmer beschrieben, bei dem zwischen dem Aufnahmekörper und dem Werkstück zum einen eine Zwischenscheibe und zum anderen eine Taumelscheibe angeordnet sind, wobei die Abstützung von der Zwischenscheibe und der Taumelscheibe jeweils über Stahlrollen erfolgt, die orthogonal zueinander ausgerichtet sind.

Durch offenkundige Vorbenutzung ist weiterhin ein Stirnseitenmitnehmer der Basile GmbH bekannt, bei dem ein Ausgleichssystem mittels Keilhebel eingesetzt wird, das eine Mitnahme mittels vier Mitnehmerbolzen ermöglicht. Dabei wird der Keilhebelkörper von zwei Keilhebelstiften in der richtigen Position gehalten, die wiederum von zwei Keilhebelstützen getragen werden. Auf dem Keilhebelkörper befinden sich zwei Schwimmplättchen, die von zwei elastischen Elementen auf dem Keilhebelkörper in Position gehalten werden.

Die vier Mitnehmerbolzen werden vom Mitnehmerbolzenkopf geführt. Die Zentrierspitze ist unabhängig von dem Mitnehmerbolzen und wird mittels eines Tellerfederpakets gespannt. Für den Links- Rechtslauf besteht die Möglichkeit, die Mitnehmerbolzen auszutauschen.

Der Erfindung liegt die Aufgabe zu Grunde, einen Stirnseitenmitnehmer der eingangs genannten Art so auszubilden, dass die ausgleichende spielfreie Mitnahmefunktionen im Links- und Rechtslauf in die vorhandene Bauform konventioneller Stirnseitenmitnehmer integriert werden kann und gleichzeitig der Bedienungs- und Wartungsaufwand reduziert wird.

Diese Aufgabe wird nach der Erfindung durch ein Stirnseitenmitnehmer gemäß dem Anspruch 1 gelöst.

Der erfindungsgemäße Stirnseitenmitnehmer zeichnet sich durch seinen sehr einfachen Aufbau aus, bei dem über die in die Nuten der Mitnehmerscheibe eingreifenden Abstützbolzen das Drehmoment von dem mit der Arbeitsspindel der Drehmaschine gekoppelten Aufnahmekörper an die Mitnehmerscheibe übertragen werden kann, wobei durch die axiale Verstellbarkeit der Abstützbolzen eine pendelnde Mitnahme der Mitnehmerscheibe erfolgen kann, also die Mitnehmerscheibe sich an schrägstehende Werkstückflächen anpassen kann, ohne die Einspannung und Drehmomentübertragung des Werkstücks an seiner Stirnseite zu beeinträchtigen. Auf der dem Werkstück zugewandten Seite kann die Mitnehmerscheibe Zahnungen aufweisen, wobei die Erfindung aber auch mit jeder anderen bekannten Variante für den Kontakt zwischen der Stirnseite des Werkstücks und der Mitnehmerscheibe realisiert werden kann. Gemäß der Erfindung wird insbesondere gefördert, dass die Abstützbolzen spielfrei mit der Mitnehmerscheibe zusammenwirken und insbesondere ein Wechsel zwischen dem Rechts- und Linkslauf die pendelnde Mitnahme nicht stört. Das Zusammenwirken der Dreipunktauflage und die Führung der Abstützbolzen in den V-förmigen, prismatischen Zonen der Nuten verhindert das Verdrehen der Mitnehmerscheibe unabhängig von der Kraftrichtung und der Pendelfunktion.

Um weiterhin das Zusammenwirken der Abstützbolzen mit den Nuten der Mitnehmerscheibe zu fördern, weisen die Zentrierköpfe kugelige Zentrierflächen auf, so dass die Abstützbolzen sich über die kugeligen Zentrierflächen in den V-förmigen Zonen in den Nuten ausrichten können und diese Ausrichtung unabhängig vom Drehsinn der Arbeitsspindel beibehalten wird.

Im Rahmen der Erfindung besonders bevorzugt ist es, wenn die Abstützbolzen mit ihrem der Mitnehmerscheibe abgewandten Ende auf einer Ausgleichsscheibe abgestützt sind, da so die axiale Verstellbarkeit der Abstützbolzen miteinander gekoppelt wird und ein Ausgleich bei der Anlage

der Mitnehmerscheibe an der Stirnseite des Werkstücks über die die Mitnehmerscheibe beaufschlagenden Abstützbolzen erfolgt.

Weiterhin günstig ist es, wenn mindestens drei der Abstützbolzen vorgesehen sind und die Ausgleichscheibe auf dem Aufnahmekörper an einem Lager sphärisch geführt ist. Mit dieser Gestaltung wird eine Dreipunktauflage bereitgestellt, bei der über die sphärische Führung der Ausgleichsscheibe auf dem Aufnahmekörper sich die der Mitnehmerscheibe zugewandten Enden der Abstützbolzen entsprechend ausrichten. Alternativ ist es gleichfalls möglich, auf der Ausgleichsscheibe den Abstützbolzen zugeordneten Schrägflächen bereitzustellen, durch die die Ausgleichsscheibe mit einer Planfläche auf den Aufnahmekörper ausgleichend radial verstellt wird.

Im Rahmen der Erfindung ist weiterhin bevorzugt vorgesehen, dass der Stützzylinder durch einen zentrischen Durchgang der Ausgleichsscheibe reicht, also die Ausgleichsscheibe auf dem Stützzylinder angeordnet ist und insoweit im wesentlichen Schwenkbewegung ausführt, ohne radial verrutschen zu können.

Im Folgenden wird die Erfindung an einem in der Zeichnung dargestellten Ausführungsbeispiel näher erläutert; es zeigen:
- Fig. 1: einen Längsschnitt durch einen erfindungsgemäßen Stirnseitenmitnehmer,

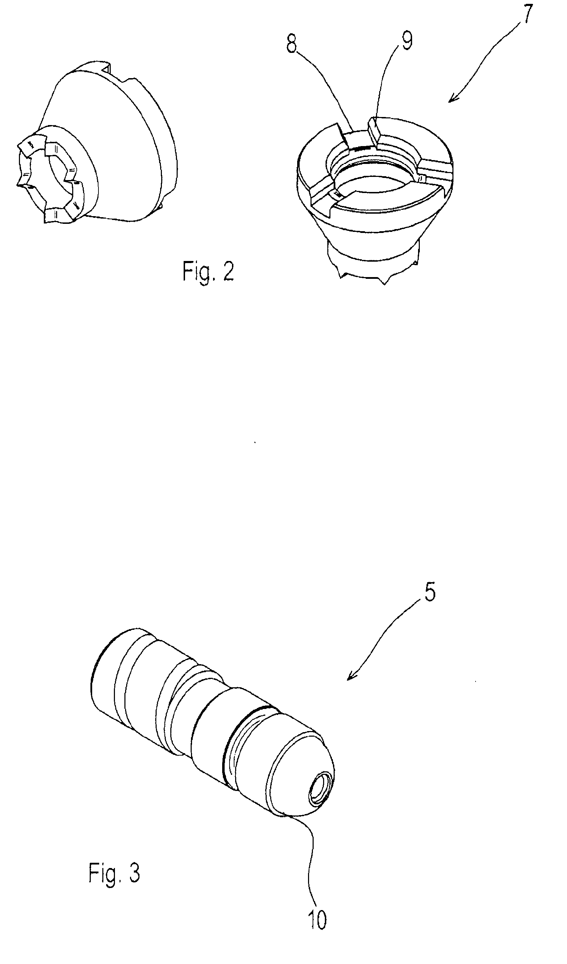

- Fig. 2: zwei perspektivische Darstellungen der Mitnehmerscheibe aus unterschiedlichen Sichten, und
- Fig. 3: eine perspektivische Darstellung des Abstützbolzens.

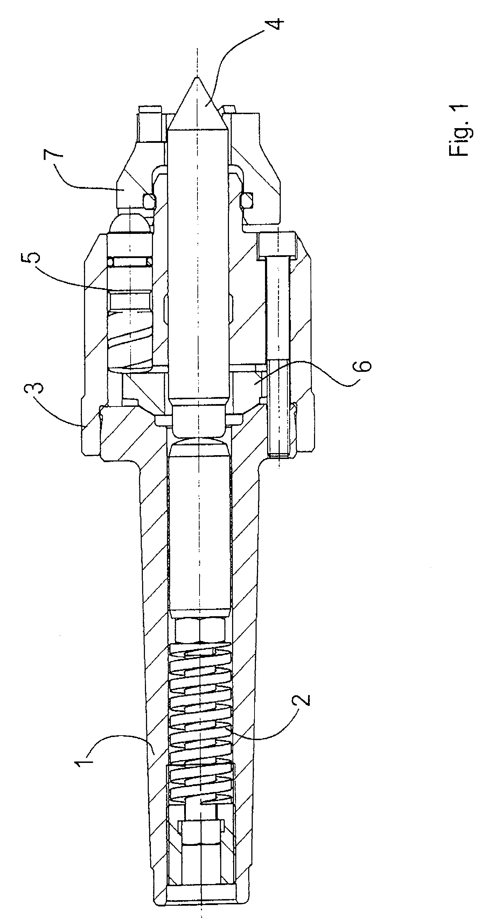

In der Zeichnung ist in Figur 1 in einem Längsschnitt ein erfindungsgemäßer Stirnseitenmitnehmer dargestellt, der mittels seinem Aufnahmekörper 1 mit der Arbeitsspindel einer Werkzeugmaschine gekoppelt werden kann. In dem Aufnahmekörper 1 ist eine Druckfeder 2 zur mittelbaren oder unmittelbaren Abstützung eines Stützzylinders mit einer Spitze 4 angeordnet, wobei über den Druck die Zentrierkraft der Spitze 4 eingestellt und damit ihre Position während der Zentrierfunktion definiert werden kann. Der Stirnseitenmitnehmer weist weiterhin eine den Stützzylinder umgebende, zur Anlage an dem Werkstück bestimmte Mitnehmerscheibe 7 auf sowie einen Mitnehmerkopf 3, in dem eine Mehrzahl von Abstützbolzen 5 in außermittigen, parallel zur Mittenachse ausgerichteten Aufnahmen axial beweglich angeordnet sind. Der Mitnehmerkopf 3 ist drehfest und axial unverschiedlich mit dem Aufnahmeköper 1 gekoppelt, wobei dies bei dem in der Zeichnung dargestellten Ausführungsbeispiel durch den Mitnehmerkopf 3 durchsetzende, in eine zugeorndete Gewindebohrung des Aufnahmekörpers 1 eingreifende Schrauben realisiert ist, die gleichmäßig über den Umfang verteilt vorgesehen sind. Jeder Abstützbolzen 5 greift mit einem eine kugeligen Zentrierfläche aufweisenden Zentrierkopf 10 in eine radiale Nut 8 der Mitnehmerscheibe 7 ein, die zum Zusammenwirken mit dem zugeordneten Zentrierkopf 10 eine V-förmige Zone 9 aufweist.

Bei dem in der Zeichnung dargestellten Ausführungsbeispiel sind die Abstützbolzen 5 mit ihrem der Mitnehmerscheibe 7 abgewandten Ende auf einer Ausgleichsscheibe 6 abgestützt, die auf dem Aufnahmekörper 1 in einem Lager sphärisch geführt ist. Das in der Zeichnung gezeigte Ausführungsbeispiel umfasst dabei drei Abstützbolzen 5, die eine Dreipunktauflage der Mitnehmerscheibe 7 gewährleisten. Der Stützzylinder reicht durch einen zentrischen Durchgang der Ausgleichsscheibe 6 hindurch.

Der erfindungsgemäße Stirnseitenmitnehmer ermöglicht nun eine Anlage der auf der dem Werkstück zugewandten Seite verzahnten Mitnehmerscheibe 7 an dem Werkstück, auch wenn dessen Stirnfläche schräg relativ zur Achse der Arbeitsspindel und des Stirnseitenmitnehmers orientiert ist, wobei beim Einspannen des Werkstücks im Zusammenwirken mit einer Reitstockpinole die Mitnehmerscheibe 7 sich der Stirnfläche des Werkstücks anlehnt und dabei die Abstützbolzen 5 in den Aufnahmen ausgleichend über die Ausgleichsscheibe 6 verstellt. Zugleich werden die kugeligen Zentrierflächen der Zentrierköpfe 10 von den Abstützbolzen 5 in die Nuten 8 mit den V-förmigen Zonen 9 gepresst, so dass eine spielfreie, pendelnde Mitnahme der Mitnehmerscheibe 7 erzielt wird.

### Bezugszeichenliste

- 1: Aufnahmekörper
- 2: Druckfeder
- 3: Mitnehmerkopf
- 4: Spitze
- 5: Abstützbolzen
- 6: Ausgleichsscheibe
- 7: Mitnehmerscheibe
- 8: Nut
- 9: Zone
- 10: Zentrierkopf

## Patentansprüche

1. Stirnseitenmitnehmer mit einem Aufnahmekörper (1), in dem eine Druckfeder (2) zur mittelbaren oder unmittelbaren Abstützung eines Stützzylinders mit einer Zentrierspitze (4) angeordnet ist, und mit einer den Stützzylinder umgebenden, zur Anlage an dem Werkstück bestimmten Mitnehmerscheibe (7), wobei in einem mit dem Aufnahmekörper (1) drehfest gekoppelten Mitnehmerkopf (3) eine Mehrzahl von Abstützbolzen (5) in außermittigen, parallel zur Mittenachse ausgerichteten Aufnahmen axial beweglich angeordnet sind und jeder Abstützbolzen (5) mit einem Zentrierkopf (10) in eine radiale Nut (8) eingreift, die auf der dem Werkstück abgewandten Seite der Mitnehmerscheibe (7) ausgebildet ist, wobei die Zentrierköpfe kugelige Zentrierflächen aufweisen,
**dadurch gekennzeichnet, dass** die Nuten (8) zum Zusammenwirken mit den zugeordneten Zentrierköpfen (10) V-förmige Zonen (9) aufweisen.

2. Stirnseitenmitnehmer nach Anspruch 1, **dadurch gekennzeichnet, dass** die Abstützbolzen (5) mit ihrem der Mitnehmerscheibe (7) abgewandten Ende auf einer Ausgleichsscheibe (6) abgestützt sind.

3. Stirnseitenmitnehmer nach Anspruch 2, **dadurch gekennzeichnet, dass** mindestens drei der Abstützbolzen (5) vorgesehen sind und die Ausgleichsscheibe (6) auf dem Aufnahmekörper (1) in einem Lager sphärisch geführt ist.

4. Stirnseitenmitnehmer nach einem der Ansprüche 2 bis 3,
**dadurch gekennzeichnet, dass** der Stützzylinder durch einen zentrischen Durchgang der Ausgleichsscheibe (6) hindurch reicht.

## Claims

1. A face driver having a body (1) in which a compression spring (2) is directly or indirectly braced against a centering rod having a centering point (4), and having a driver disk (7) that surrounds the centering rod and is intended for contacting the workpiece, whereby a driver head (3) rotationally coupled to the body (2) is formed with a plurality of guides offset from and extending parallel to a center axis and holding respective axially shiftable support pins (5), the driver disk (7) having a back face turned away from the workpiece and formed with a plurality of radial grooves (8) in which fit front heads (10) of the support pins (5), whereby the centering heads (10) are part-spherical, **characterized in that** the grooves (8) have V-forming bevels (9) fitting with the front heads (10).

2. The face driver according to claim 1, **characterized in that** the support pins (5) have rear ends braced against a compensating disk (6).

3. The face driver according to claim 2, **characterized in that** there are at least three support pins (5) and the compensating disk (6) is spherically swivelable in a bearing on the body (1).

4. The face driver according to one of claims 2 to 3, **characterized in that** the support rod extends through a central throughgoing bore of the compensating disk (6).

## Revendications

1. Entraîneur frontal comprenant un corps récepteur (1) dans lequel est disposé un ressort de compression (2) pour le soutien indirect ou direct d'un cylindre d'appui présentant une pointe de centrage (4), et comprenant un disque d'entraînement (7) entourant le cylindre d'appui, destiné à venir en appui sur la pièce, une pluralité de boulons d'appui (5) étant disposés de manière mobile axialement dans des logements excentrés, orientés parallèlement à l'axe médian dans une tête d'entraîneur (3) solidaire en rotation du corps récepteur (1), et chaque boulon d'appui (5) s'engageant par une tête de centrage (10) dans une rainure radiale (8) formée sur le côté du disque d'entraînement (7) opposé à la pièce, les têtes de centrage (10) présentant des surfaces de centrage sphériques, **caractérisé en ce que** les rainures (8) présentent des zones en forme de V (9) destinée à coopérer avec les têtes de centrage (10) associées.

2. Entraîneur frontal selon la revendication 1, **caractérise en ce que** les boulons d'appui (5) prennent appui sur un disque de compensation (6) par leur extrémité opposée au disque d'entraînement (7).

3. Entraîneur frontal selon la revendication 2, **caractérisé en ce qu'**au moins trois des boulons d'appui (5) sont prévus et le disque de compensation (6) est guidé sphériquement dans un pallier sur le corps récepteur (1).

4. Entraîneur frontal selon l'une des revendications 2 à 3, **caractérisé en ce que** le cylindre d'appui s'étend à travers un passage centré du disque de compensation (6).
